## Europäisches Patentamt
## European Patent Office
## Office européen des brevets

(19)

(11) Veröffentlichungsnummer: **0 033 145**
**A1**

(12) # EUROPÄISCHE PATENTANMELDUNG

(21) Anmeldenummer: **81100507.3**

(22) Anmeldetag: **23.01.81**

(51) Int. Cl.³: **F 24 D 11/00**
**F 24 F 5/00, F 24 J 3/02**
**E 04 B 1/76**

(30) Priorität: **24.01.80 DE 3002513**

(43) Veröffentlichungstag der Anmeldung:
**05.08.81 Patentblatt 81/31**

(84) Benannte Vertragsstaaten:
**AT BE CH FR GB IT LI LU NL SE**

(71) Anmelder: **Pöschl, Günter**
**Schillerstrasse 48**
**D-7053 Schwaikheim(DE)**

(72) Erfinder: **Pöschl, Günter**
**Schillerstrasse 48**
**D-7053 Schwaikheim(DE)**

(74) Vertreter: **Menges, Rolf et al,**
**PATENTANWÄLTE MENGES & PRAHL Erhardtstrasse 12**
**D-8000 München 5(DE)**

(54) **Dach für ein solarbeheiztes Haus und dafür vorgesehener Rohrkollektor und Luftkanal.**

(57) In einem Dach für ein solarbeheiztes Haus ist ein Luftsammelraum (6) zum Erwärmen von Luft durch Wärmeabsorption aus der auf das Dach eingestrahlten Sonnenenergie vorgesehen.

Damit die äußere Erscheinung des Hauses nicht durch Kollektoren beeinträchtigt wird und keine in dem Haus erzeugte Wärme verloren geht, enthält der unter dem Dachfirst (2) angeordnete und mit Lichtstrahlung nach innen durchlassenden Formplatten (3) gedeckte Luftsammelraum (6) einen Sonnenkollektor aus speziellen Rohrkollektoren (11) mit geschlossenen Flüssigkeitskreislaufsystem und ist über Zu- und Abluftkanäle (9, 16) mit dem Inneren des Hauses verbunden. Die Rohrkollektoren (11) bestehen jeweils aus einem transparenten Rohr und einem darin koaxial gehaltertem und von der Flüssigkeit durchströmten geschwärzten Rohr. Luftkanäle können durch eine Folie in Längsrichtung hälftig geteilt und in den Hälften (211, 212) von Luft unterschiedlicher Temperatur durchströmt sein, so daß sie als Frischluftwärmetauscher dienen können.

./...

Fig. 4

Dach für ein solarbeheiztes Haus und dafür
vorgesehener Rohrkollektor und Luftkanal

Die Erfindung betrifft ein Dach der im Oberbegriff des Patentanspruchs 1 angegebenen Art sowie einen dafür vorgesehenen Rohrkollektor und Luftkanal.

Es ist bekannt, auf dem Dach eines Hauses einen Sonnenkollektor anzubringen, der von Flüssigkeit durchströmt ist, die in
ihm durch Strahlungsabsorption erwärmt wird. Nachteilig ist dabei, daß diese Sonnenkollektoren stets sichtbar auf der Dachfläche angebracht werden müssen, was von manchen Baubehörden
nicht genehmigt wird.

Weiter sind Häuser, die mit Umluft beheizt werden, wobei die
Umluft in dem Haus umgewälzt wird und über Wärmetauscher die

in das Haus einströmende Frischluft erwärmt, bekannt.

Schließlich ist ein Dach bekannt (DE-OS 28 09 442), bei welchem die Dacheindeckung zwischen einem Abdichtbelag und einer Wärmeisolierschicht angeordnete Zwischenräume aufweist, in denen eine Luftzirkulation zwischen einer in das Innere des Gebäudes weisenden ersten Öffnung und einer nach außerhalb des Gebäudes weisenden zweiten Öffnung stattfindet. Die Sonnenenergie wird bei diesem bekannten Dach nur im Winter ausgenutzt, wobei dann noch weitere Heizvorrichtungen erforderlich sind, um die von außen durch die Zwischenräume in das Haus geleitete Luft aufzuwärmen. Im Sommer wird die Luft aus dem Inneren des Hauses durch die Zwischenräume hindurch nach außen geleitet und es soll verhindert werden, daß die Sonneneinstrahlung auf der Dacheindeckung sich durch einen Wärmeaustausch in das Innere des Hauses überträgt. Damit geht Wärme aus dem Inneren des Hauses ungenutzt verloren.

Aufgabe der Erfindung ist es, ein Dach der im Oberbegriff des Patentanspruchs 1 angegebenen Art so mit einem Sonnenkollektor zu versehen, daß dieser die äußere Erscheinung des Hauses nicht beeinträchtigt, und gleichzeitig keinerlei in dem Haus erzeugte Wärme verloren gehen zu lassen.

Diese Aufgabe wird durch die im Kennzeichen des beigefügten Patentanspruchs 1 angegebenen Merkmale gelöst.

Bei dem Dach nach der Erfindung wird die Luft in dem Luftsammelraum unterhalb der Formplatten durch die eingestrahlte Sonnenenergie nach dem Glashauseffekt aufgeheizt. Jeder Rohrkollektor des Rohrkollektorsystems arbeitet für sich ebenfalls nach dem Glashauseffekt, um eine in einem geschlossenen Kreislauf strömende Flüssigkeit zu erwärmen, und Luft aus dem Inneren des Hauses, die im Haus Wärme aufgenommen hat, sei es durch Körperwärme, Fernsehgeräte, Kühlschränke od.dgl., wird über Zu- und Abluftkanäle durch den Luftsammelraum geleitet und darin erwärmt.

Damit ergeben sich folgende Vorteile: Wärme aus dem Inneren des Hauses geht nicht verloren, sondern wird an den Flüssigkeitskreislauf in dem Luftsammelraum abgegeben, wo die Umluft außerdem durch Absorption von von außerhalb des Hauses eingestrahlter Energie wieder erwärmt werden kann. Das aus speziellen Rohrkollektoren (insbesondere gemäß den Ansprüchen 11 und 12) aufgebaute Kollektorsystem ist voll in das Innere des Daches integriert, so daß die äußere Gesamterscheinung des Hauses durch das Kollektorsystem in keiner Weise beeinträchtigt wird.

Weiterbildungen und zweckmäßige Ausgestaltungen der Erfindung bilden den Gegenstand der Unteransprüche.

Ein Ausführungsbeispiel der Erfindung wird im folgenden unter Bezugnahme auf die beigefügten Zeichnungen näher beschrieben. Es zeigt

| | |
|---|---|
| Fig. 1 | einen Schnitt durch das Dach und einen Teil des darunter befindlichen Hauses, |
| Fig. 2 | in perspektivischer Darstellung einen aufgeschnittenen Rohrkollektor, |
| Fig. 3 | eine Seitenansicht eines Rohrkollektors, |
| Fig. 4 | in gleicher Ansicht wie in Fig. 1 eine Ausführungsform der Erfindung mit einem als Luftkanal ausgebildeten Frischluftwärmetauscher und |
| Fig. 5 | einen vergrößerten Querschnitt auf der Linie V-V in Fig. 4. |

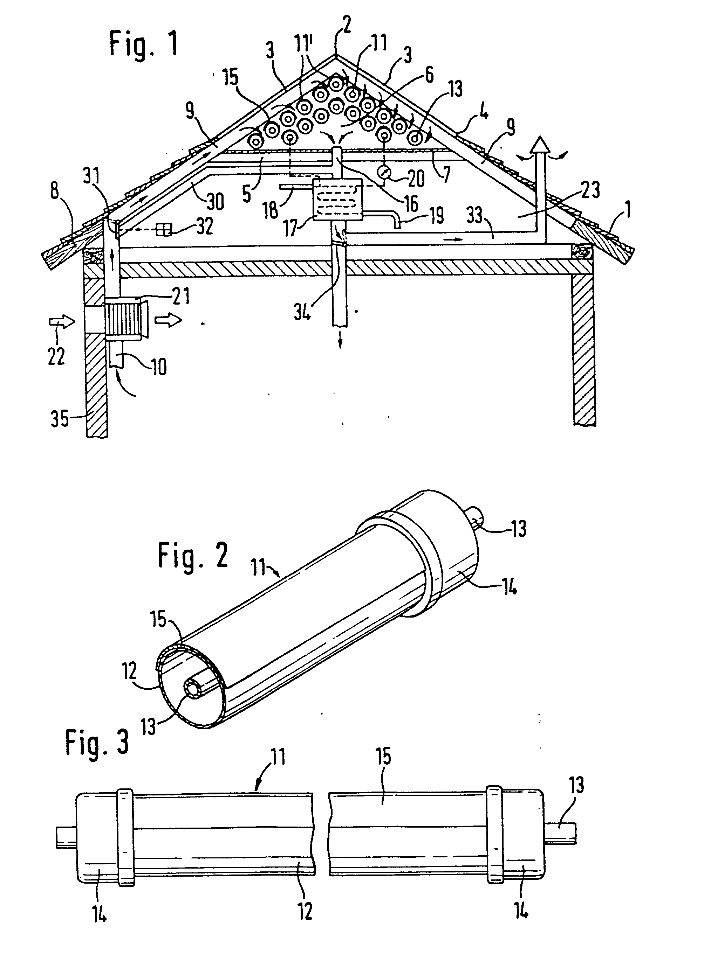

Gemäß Fig. 1 ist das Dach mit den üblichen Dachziegeln 1 gedeckt, die bei dem hier beschriebenen Ausführungsbeispiel, etwa einem 1-Familien-Reihenhaus, etwa 1 m unterhalb des Firstes 2 enden. Der verbleibende Teil des Daches ist beiderseits des Firstes 2 jeweils mit einer Formplatte 3 aus transparentem Kunststoff bedeckt. Die Formplatten 3 können so pigmentiert werden, daß sie Wärmestrahlung durchlassen, aber in der Farbgestaltung von den Dachziegeln 1 nicht zu unterscheiden sind, so daß die Dachfläche ein einheitliches Aussehen erhält.

Etwa auf der Höhe der unteren horizontalen Kanten 4 der Formplatten 3 ist in dem Dachinnenraum 23 eine Zwischendecke 5
eingezogen, so daß oberhalb derselben ein Luftsammelraum 6 gebildet ist. Die Zwischendecke 5 ist gut wärmeisoliert und auf
ihrer dem Luftsammelraum 6 zugewandten Seite mit einer Thermoreflexionsfolie 7 belegt. Zwischen den Dachsparren 8 sind beiderseits des Firstes 2 Zuluftkanäle 9 gebildet, die alle unten
über einen Umluftkanal 10 mit den Räumen des Hauses und oben
im Bereich der Formplatten 3 mit dem Inneren des Luftsammelraums 6 in Verbindung stehen.

In dem Luftsammelraum 6 befindet sich ein Sonnenkollektor aus
mehreren sich über die Länge des Daches erstreckenden und auf
Lücke angeordneten Rohrkollektoren 11, wie es in Fig. 1 im Schnitt gezeigt ist. Die Aufhängung der Rohrkollektoren 11 befindet sich
zwischen den Dachsparren 8 und besteht aus Knotenstücken (nicht
gezeigt), die mit Aussparungen versehen sind, in die die Rohrkollektoren eingeschoben sind.

Gemäß den Fig. 2 und 3 besteht jeder Rohrkollektor aus einem
transparenten Glas- oder Kunststoffrohr 12, durch welches ein
zentrales, außen geschwärztes und von Wasser durchströmtes Metall-, insbesondere Kupferrohr 13 hindurchgeführt ist, das
durch zwei das Kunststoffrohr an beiden Enden verschließende
Kappen 14 in dem Kunststoffrohr in koaxialer Lage gehalten wird.
In ihrem dem First 2 zugewandten oberen Bereich sind die Kunststoffrohre 12 mit einer Thermoreflexionsfolie 15 belegt, die
die durch die Formplatten 3 hindurchgetretene und an der Thermoreflexionsfolie 7 reflektierte Lichtstrahlung (infrarotes, ultrarotes und ultraviolettes Licht) als Strahlenfalle auffängt,
um den Innenraum der Kunststoffrohre 12 zusätzlich aufzuheizen.
Dadurch wird die Erwärmung des Innenraums der Kunststoffrohre
12 auch bei diffusem Licht gewährleistet, indem die Lichtstrahlung mehrfach, das heißt an den Formplatten 3, an der Thermoreflexionsfolie 7 und an dem Kupferrohr 13 sowie an der Thermoreflexionsfolie 15 gebrochen wird. Die Kappen 14 bestehen bei dem hier beschriebenen Ausführungsbeispiel ebenfalls aus
Kunststoff.

Der Luftsammelraum 6 ist im Bereich der Zwischendecke 5 mit
einem Abluftkanal 16 verbunden, der über einen Wärmetauscher
17 wieder in das Innere des Hauses führt. Die inneren Kupferrohre 13 der Rohrkollektoren 11 sind zu einem geschlossenen
Wasserkreislaufsystem zusammengeschlossen. Der Wärmetauscher
17 ist über Rohre 18, 19 direkt an den Wasserkreislauf des
Hauses, beispielsweise an das Warmwasserheizsystem, angeschlossen. Ein zwischen die beiden Kreislaufsysteme der Rohrkollektoren 11 und des Wärmetauschers 17 geschaltetes Mischventil 20 gestattet, die Wasserkreisläufe in den Rohrkollektoren 11 und in dem Wärmetauscher 17 nach Wahl miteinander zu
verbinden oder voneinander zu trennen.

Die Umluft aus dem Haus, die durch alle in dem Haus befindlichen Wärmequellen (Körperwärme, Fernsehgeräte, Kühlschränke,
usw.) erwärmt worden ist, strömt über den Umluftkanal 10 in
die Zuluftkanäle 9. In dem Umluftkanal 10 ist ein weiterer
Wärmetauscher 21 angeordnet, in welchem die dem Haus von außen
zugeführte Frischluft 22 durch die aus dem Hausinneren zum
Dach strömende Umluft erwärmt wird, bevor sie in das Innere
des Hauses gelangt.

Am Eintritt des Umluftkanals 10 in die Zuluftkanäle 9 ist ein
Zweigkanal 30 angeschlossen, der den Umluftkanal 10 mit dem
Abluftkanal 16 vor dem Wärmetauscher 17 verbindet. An der Verbindungsstelle zwischen dem Zweigkanal 30 und dem Umluftkanal
10 ist eine mit Hilfe eines fernsteuerbaren Stellantriebs 32
verschwenkbare Klappe 31 angeordnet, mit der der Einlaß der
Zuluftkanäle 9 versperrt (in Fig. 1 gestrichelt dargestellte
Klappenstellung) und der Umluftkanal 10 über den Zweigkanal 30
direkt mit dem Abluftkanal 16 verbunden werden kann. Der Zweck
dieser Maßnahme ist weiter unten erläutert.

Stromabwärts des Wärmetauschers 17 wird die Luft entweder ins Haus oder über einen Austrittskanal 33 ins Freie geleitet, je nach der Stellung einer fernsteuerbaren Klappe 34, die in der mit ausgezogener Linie dargestellten Stellung den ins Haus führenden Kanal und in der gestrichelt dargestellten Stellung den Austrittskanal 33 verschließt.

Das hier beschriebene Dach arbeitet folgendermaßen:

In dem Haus erwärmte Umluft strömt über den Umluftkanal 10 nach oben und durch die Zuluftkanäle 9 in den Luftsammelraum 6. In diesem Raum wird die Umluft durch die über die Formplatten 3 eindringende Strahlung nach dem Glashauseffekt weiter erwärmt und strömt dann durch den Abluftkanal 16 und durch den Wärmetauscher 17, in welchem sie ihre Wärme an den Wasserkreislauf desselben abgibt. Neben der Umluft heizt die in den Luftsammelraum 6 eintretende Strahlung die um die Kupferrohre 13 durch die Rohre 12 und die Kappen 14 gebildeten Luftkammern der Rohrkollektoren 11 auf und erwärmt so das in den Rohrkollektoren strömende Wasser, wobei die Strahlungsenergie zusätzlich durch die außen geschwärzten Kupferrohre direkt durch Absorption aufgenommen wird. Der Glashauseffekt und die Strahlungsabsorption im Innern der Rohrkollektoren 11 wird durch die Thermoreflexionsfolie 15 noch verstärkt. Die gleiche Wirkung wird in dem Luftsammelraum 6 durch die Thermoreflexionsfolie 7 erzielt. Der Wasserkreislauf durch den Wärmetauscher 17 und der durch die Rohrkollektoren 11 werden, wie erwähnt, durch das Mischventil 20 miteinander gekoppelt oder voneinander getrennt.

Im Winter oder bei Nacht kann es erwünscht sein, die Zuluftkanäle 9 für Umluft aus dem Haus zu sperren, damit diese nicht Wärme an der kalten Dachfläche verliert. Es werden deshalb die Zuluftkanäle 9 durch Verschwenken der Klappe 31 in die in Fig. 1 gestrichelt dargestellte Stellung versperrt und der Zweigkanal 30 wird geöffnet, so daß die Umluft direkt über den Abluftkanal 16 in den Wärmetauscher 17 gelangt. In den dann durch die Klappe 31 verschlossenen Zuluftkanälen 9 befindet sich deshalb ein

Luftisolationspolster, das bei Sonneneinstrahlung durch Konvektion in Bewegung versetzt wird, so daß ein Luftaustausch zwischen den Zuluftkanälen 9 und dem Luftsammelraum 6 auftreten kann. Das Verschwenken der Klappe 31 kann über eine Messung der Lufttemperatur, z.B. dem Luftsammelraum 6, thermostatisch gesteuert werden. Bei ausreichender Sonneneinstrahlung kann auf diese Weise die Klappe 31 automatisch wieder in die in Fig. 1 mit ausgezogener Linie dargestellte Stellung verschwenkt werden. In gleicher Weise wird die Klappe 34 gesteuert, um die Luft nach dem Durchströmen des Wärmetauschers 17 wahlweise ins Haus oder über den Austrittskanal 53 ins Freie zu leiten. Die Klappe 34 kann in Zwischenstellungen gehalten werden, so daß die ins Haus gehende Luft zur Klimatisierung desselben herangezogen werden kann.

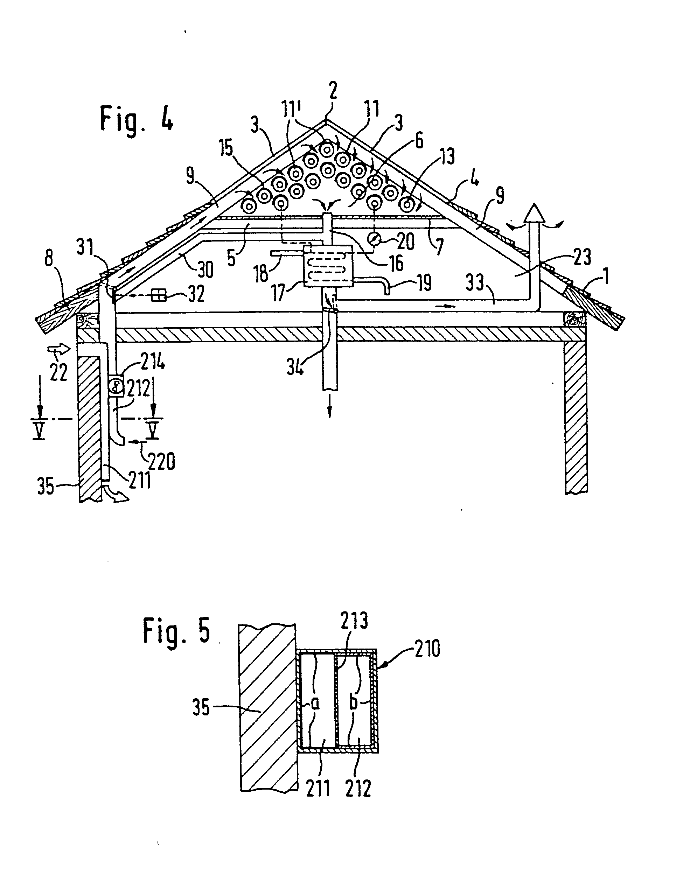

In Fig. 4 ist das Dach mit einem anderen Frischluftwärmetauscher dargestellt, von dem Fig. 5 einen Querschnitt zeigt. Dieser Wärmetauscher 210 könnte auch im Bereich des Daches unterhalb der Klappe 31 angeordnet und mit dem Dach fest verbunden sein.

Der Wärmetauscher 210 besteht aus einem Luftkanal (beispielsweise aus Blech), der vertikal durch eine sehr dünne Folienwand 213 aus Kunststoff oder Metall in zwei Hälften 211 bzw. 212 unterteilt ist. In die Kanalhälfte 211 tritt die Frischluft 22 oben ein und strömt abwärts. Die Warmluft 220 aus dem Haus strömt über eine Eintrittsöffnung, die höher gelegen ist als die Austrittsöffnung der Frischluft, in die Kanalhälfte 212 ein und in dieser nach oben. Falls die Konvektion zur Förderung der Warmluft 220 nicht ausreichen sollte, kann ein Gebläse 214 eingeschaltet werden, das in der Kanalhälfte 212 angeordnet ist (vgl. Fig. 4). Die Kanalhälfte 211 ist auf ihren drei Innenwänden a geschwärzt, während die Kanalhälfte 212 auf ihren drei Innenwänden b mit einer Thermoreflexionsfolie belegt ist. Die Thermoreflexionsfolie reflektiert die Wärmestrahlung der aufwärts an ihr vorbeiströmenden Warmluft gegen die Folienwand 213, über die die Wärme an die auf der entgegengesetzten Seite abwärts strömende Frischluft abgegeben wird, indem dort die geschwärzten Wände die Wärme absorbieren, den Innenraum der Kanalhälfte 211 und damit auch die Frischluft erwärmen.

Der vorstehend beschriebene Wärmeaustausch zwischen der Frischluft 22 und der Warmluft 220 kann über nicht dargestellte Schieber so gesteuert werden, daß beispielsweise nur ein Teil der Frischluft in die Kanalhälfte 211 gelangt und der übrige Teil direkt ins Haus geht oder daß beispielsweise nur ein Teil der Warmluft 220 in die Kanalhälfte 212 gelangt und der übrige Teil direkt in die Zuluftkanäle 9 geht.

P a t e n t a n s p r ü c h e :

1. Dach für ein solarbeheiztes Haus, mit einem Luftsammelraum
zum Erwärmen von Luft durch Wärmeabsorption aus der auf das
Dach gestrahlten Sonnenenergie,
dadurch gekennzeichnet, daß das Dach im Bereich des Firstes (2)
mit transparenten, jegliche Lichtstrahlung nach innen durchlassenden, vorzugsweise aus Kunststoff bestehenden Formplatten (3) gedeckt ist,
daß der Luftsammelraum (6) ein unter dem First und im Bereich
der Formplatten angeordneter, gegenüber dem übrigen Dachinnenraum (23) abgeschlossener Raum ist,
daß in dem Luftsammelraum unter den Formplatten ein als Rohrkollektorsystem (11') ausgebildeter Sonnenkollektor angeordnet
ist, der ein in sich geschlossenes Flüssigkeitskreislaufsystem enthält, und
daß der Luftsammelraum über jeweils wenigstens einen Zu- und Abluftkanal (9, 16) mit dem Inneren des Hauses verbunden ist.

2. Dach nach Anspruch 1, dadurch gekennzeichnet, daß der Luftsammelraum (6) durch eine wärmeisolierte und zum First (2) hin

0033145

mit einer Thermoreflexionsfolie (7) belegte Zwischendecke (5)
von dem übrigen Dachinnenraum (23) getrennt ist.

3. Dach nach Anspruch 1 oder 2, dadurch gekennzeichnet, daß
das Rohrkollektorsystem (11') mehrere sich über die Länge des
Daches erstreckende und jeweils unterhalb der Formplatten (3)
gegenseitig auf Lücke angeordnete Rohrkollektoren (11) mit geschwärzten zentralen Rohren, die zu dem Flüssigkeitskreislaufsystem zusammengeschlossen sind, aufweist.

4. Dach nach Anspruch 3, dadurch gekennzeichnet, daß jeder
Rohrkollektor (11) ein beidseitig geschlossenes, transparentes
Rohr (12) aufweist, durch welches das zentrale Rohr (13) koaxial und mit radialem Abstand hindurchgeführt ist (Fig. 2).

5. Dach nach Anspruch 4, dadurch gekennzeichnet, daß die transparenten Rohre (12) in ihrem dem First (2) zugewandten oberen
Bereich mit einer Thermoreflexionsfolie (15) belegt sind.

6. Dach nach einem der Ansprüche 1 bis 5, dadurch gekennzeichnet, daß in dem Abluftkanal (16) ein an einen Warmwasserkreislauf des Hauses angeschlossener Wärmetauscher (17) angeordnet
ist, in welchem die in dem Luftsammelraum (6) erwärmte Luft
ihre Wärme abgibt.

7. Dach nach Anspruch 6, dadurch gekennzeichnet, daß das Flüssigkeitssystem des Rohrkollektorsystems (11') über ein Mischventil (20) wahlweise
mit dem Kreislauf des Wärmetauschers (17) verbindbar ist.

8. Dach nach einem der Ansprüche 1 bis 7, gekennzeichnet durch
einen dem Zuluftkanal (9) vorgeschalteten Umluftkanal (10) mit
einem weiteren Wärmetauscher (21) zum Erwärmen der dem Haus zugeführten Frischluft (22).

9. Dach nach einem der Ansprüche 1 bis 8, gekennzeichnet durch
einen zwischen den Einlaß des Zuluftkanals (9) und den Abluftkanal (16) geschalteten Zweigkanal (30) und durch ein steuerbares Absperrorgan (31) zum wahlweisen Verschließen des Einlasses des Zuluftkanals oder des Zweigkanals.

10. Dach nach einem der Ansprüche 1 bis 9, dadurch gekennzeichnet, daß die Formplatten (3) so pigmentiert sind, daß sie der Farbe der Dachziegel (1) angepaßt sind, ohne das Eindringen von Wärmestrahlung in den Luftsammelraum (6) zu behindern.

11. Rohrkollektor, insbesondere für ein Dach nach einem der Ansprüche 1 bis 10, gekennzeichnet durch ein transparentes Rohr (12), in welchem ein zentrales, außen geschwärztes Rohr (13) durch zwei das transparente Rohr an beiden Enden verschließende Kappen (14) koaxial gehaltert ist.

12. Rohrkollektor nach Anspruch 11, dadurch gekennzeichnet, daß das zentrale Rohr (13) aus Metall, vorzugsweise Kupfer, besteht und daß das transparente Rohr (12) und die Kappen (14) aus Kunststoff bestehen.

13. Luftkanal, insbesondere für ein Dach nach einem der Ansprüche 1 bis 10, dadurch gekennzeichnet, daß er (210) durch eine sehr dünne Folienwand aus Kunststoff oder Metall in Längsrichtung hälftig geteilt ist, daß die Hälften (211, 212) auf der Innenseite (a bzw. b) mit Ausnahme der Folienwand (213) geschwärzt bzw. mit Thermoreflexfolie belegt sind, und daß beide Hälften (211, 212) von Luft unterschiedlicher Temperatur gegenläufig durchströmt sind.

Fig. 1

Fig. 2

Fig. 3

Fig. 4

Fig. 5

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US − A − 4 103 825 (ZORNIG)<br>* Spalte 2, Zeilen 13 bis 45 *<br>−− | 1,2 |
| | FR − A2 − 2 408 792 (B.E.T. SOGETI)<br>* Seite 1, Zeile 37 bis Seite 2, Zeile 5 *<br>−− | 1 |
| | DE − A1 − 2 623 166 (MISSENARD)<br>* Seite 5, Absatz 1 *<br>−− | 2 |
| | DE − A − 2 308 674 (OLLIG SEN.)<br>* ganzes Dokument *<br>−− | 2 |
| | DE − A − 2 013 001 (PUSCH)<br>* ganzes Dokument *<br>−− | 2 |
| | DE − A1 − 2 602 320 (PRÜFLING)<br>* Seite 4, Absatz 6 *<br>−− | 3,4, 12 |
| | US − A − 3 981 293 (GILLERY)<br>* Spalte 2, Zeilen 64 bis 65;<br>Fig. 5, Positionen 112 und 114 *<br>−− | 4,12 |
| | US − A − 2 680 565 (LÖF)<br>* Spalte 6, Zeilen 66 bis 72 *<br>−− | 6 |
| | DE − A1 − 2 624 792 (MASCHINENFABRIK<br>G. KIEFER GMBH)<br>* Fig., Position 6 * ./..<br>−− | 8 |

### KLASSIFIKATION DER ANMELDUNG (Int. Cl.³)

F 24 D 11/00
F 24 F 5/00
F 24 J 3/02
E 04 B 1/76

### RECHERCHIERTE SACHGEBIETE (Int. Cl.³)

E 04 B 1/00
E 04 B 13/00
F 24 D 11/00
F 24 F 5/00
F 24 F 7/00
F 24 J 3/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 15-04-1981 | PIEPER |

EPA form 1503.1 06.78

| | Europäisches Patentamt | **EUROPÄISCHER RECHERCHENBERICHT** | Nummer der Anmeldung<br><br>EP 81 10 0507.3<br>– Seite 2 – |

| | | | |
|---|---|---|---|
| **EINSCHLÄGIGE DOKUMENTE** | | | **KLASSIFIKATION DER ANMELDUNG (Int. Cl.³)** |
| Kategorie | Kennzeichnung des Dokuments mit Angabe, soweit erforderlich, der maßgeblichen Teile | betrifft Anspruch | |
| | DE - A1 - 2 512 475 (KAHLICH)<br>* Seite 7, Absatz 3 *<br><br>-- <br><br>DE - A1 - 2 838 076 (BÄCHLI)<br>* Seite 11, Absatz 2 *<br><br>---- | 9<br><br><br><br>11 | |
| | | | **RECHERCHIERTE SACHGEBIETE (Int. Cl.³)** |